# FASCICULE DE BREVET EUROPEEN

(11) **EP 1 844 985 B1**
(45) Date de publication et mention de la délivrance du brevet: **17.06.2009**
(21) Numéro de dépôt: 07290458.4
(22) Date de dépôt: 13.04.2007
(51) Int. Cl.: B60R 5/04

(54) **Dispositif de retenue et d'articulation de tablette arrière pour véhicule automobile**
Halte- und Drehgelenkvorrichtung für Kraftfahrzeugheckplatte
Retaining and articulating device for a rear parcel shelf for vehicles

(30) Priorité: 13.04.2006 FR 0603303
(43) Date de publication de la demande: 17.10.2007
(73) Titulaire: Faurecia Automotive Industrie, 92000 Nanterre (FR)
(72) Inventeur: Jeunehomme, Franck, 08800 Montherme (FR)
(74) Mandataire: Domenego, Bertrand

(56) Documents cités:
- FR-A- 2 850 917
- US-A- 5 970 884
- US-B1- 6 394 002

## Description

La présente invention concerne un dispositif de retenue et d'articulation de tablette arrière de véhicule, ainsi qu'un ensemble à tablette arrière pour véhicule automobile.

Il est fréquent que des véhicules automobiles possèdent une tablette arrière qui, en position normale de repos du véhicule, sépare un espace de coffre placé sous la tablette d'un espace d'habitacle relié au compartiment des passagers.

Il est souhaitable qu'une telle tablette arrière puisse pivoter à son bord avant pour dégager l'accès à l'espace de coffre, et il est aussi souhaitable que la tablette arrière puisse être retirée du véhicule, par exemple pour le transport d'objets de hauteur supérieure à celle du coffre.

On connaît déjà de nombreux dispositifs ayant ces fonctions d'articulation de la tablette arrière, et de retenue amovible de celle-ci. En particulier, on connaît de nombreux dispositifs dans lesquels des axes, portés par des supports latéraux ou par la tablette, coopèrent avec des logements de forme complémentaire, portés par la tablette ou les supports latéraux respectivement. Les différents systèmes ayant de tels axes qui coopèrent avec un logement adapté posent cependant des problèmes de fabrication, notamment d'assemblage de diverses pièces, si bien que le coût des dispositifs de retenue et d'articulation de tablette est élevé.

On a essayé de réduire le coût de ces dispositifs de retenue et d'articulation par intégration des dispositifs aux supports et aux tablettes afin d'en réduire le coût, notamment en utilisant un nombre aussi réduit que possible d'éléments.

Ainsi, le document FR-2 816 560 qui sert de base à la présentation en deux parties de la revendication 1, décrit un dispositif de retenue et d'articulation d'une tablette arrière dans lequel un support latéral comporte, à sa partie avant proche d'un siège arrière d'automobile, deux doigts qui délimitent une fente entre eux. Cette fente est suffisamment large pour qu'un bord épaissi d'une jupe de tablette arrière puisse pénétrer par la fente lorsque la tablette est en position très levée, mais suffisamment étroite pour empêcher la sortie de la tablette de la fente formée entre les deux doigts lorsque la tablette est moins levée. Les bords de la tablette sont en appui sur les supports latéraux.

Le document US-6 394 002 décrit un dispositif de maintien et d'articulation de tablette qui, dans tous ses modes de réalisation, comporte une partie élastiquement déformable pour la retenue de la tablette sur son support. La séparation et la mise en coopération nécessitent toutes deux la déformation de cette parti déformable.

Les documents FR-2 850 917 et US-5 970 884 décrivent tous deux des dispositifs d'articulation de tablette dans lesquels le bord avant de la tablette s'emboîte dans des logements de supports latéraux et la tablette est bloquée en position basse.

Il serait souhaitable de disposer d'un dispositif de retenue et d'articulation permettant un enlèvement facile de la tablette, c'est-à-dire sans avoir à lever excessivement la tablette, réalisé avec de faibles coûts de fabrication de la tablette et de ses supports.

Selon l'invention, cet objet est atteint par séparation des fonctions d'articulation d'une part et de retenue d'autre part dans des zones décalées l'une par rapport à l'autre dans la direction transversale du véhicule. Plus précisément, du côté le plus éloigné de l'axe longitudinal du véhicule, la fonction d'articulation est obtenue par simple contact d'un bord de tablette avec une butée, et, dans une partie plus proche de l'axe longitudinal du véhicule, la retenue de la tablette vers le haut est assurée par une butée qui dépasse du support latéral.

Plus précisément, l'invention concerne un dispositif de retenue et d'articulation de tablette arrière destinée à un véhicule automobile ayant un axe longitudinal central dans sa direction avant-arrière, du type qui est formé par
- un support latéral ayant un corps muni d'un flasque sensiblement horizontal disposé du côté du support tourné vers l'axe longitudinal central, et
- une tablette arrière ayant une position de repos dans laquelle elle est pratiquement horizontale, la tablette ayant un corps muni, du côté tourné vers le support latéral, d'un flasque qui, dans la position de repos, est supporté par le flasque du support latéral.

Selon l'invention,
- le flasque du support latéral comporte, depuis le corps du support latéral vers l'axe longitudinal du véhicule, une portion adjacente au corps du support latéral et une portion éloignée de ce corps, le bord avant de la portion éloignée du flasque étant plus en arrière que le bord avant de la portion adjacente du flasque, de sorte qu'une encoche est délimitée par le bord avant de la partie éloignée et le bord longitudinal avant de la portion adjacente du flasque,
- le support latéral comporte un ensemble de butée comprenant une butée d'articulation solidaire de la portion adjacente du flasque du support latéral et disposée en avant du bord avant de la portion éloignée du flasque, et une butée de retenue disposée au-dessus de l'encoche, au niveau du bord avant de la partie éloignée du flasque ou en avant de ce bord avant, un espace vertical de logement étant dégagé entre la butée de retenue et le prolongement de la surface supérieure du flasque dans l'encoche,
- le flasque de la tablette arrière comprend, depuis le corps de tablette et en s'éloignant de l'axe longitudinal, une portion adjacente au corps de tablette et une portion éloignée de ce corps, le bord avant de la portion éloignée étant plus en arrière que le bord avant de la portion adjacente, de sorte qu'une encoche de flasque de tablette est délimitée par le bord avant de la partie éloignée et le bord longitudinal avant de la portion adjacente,
- le bord avant de la portion éloignée de flasque de la tablette délimite un axe de pivotement de tablette par contact avec la butée d'articulation de la portion adjacente de flasque du support latéral, l'axe étant transversal à l'axe longitudinal central du véhicule,
- l'épaisseur de la partie avant de la portion adjacente de flasque de tablette qui est adjacente à l'encoche de flasque de tablette est inférieure ou égale audit espace vertical de logement, et,
- dans la position de repos de la tablette sur le support latéral, la portion éloignée du flasque de la tablette est superposée à la portion adjacente du flasque du support latéral, et la portion adjacente du flasque de la tablette est superposée à la portion éloignée du flasque du support latéral, les parties avant des portions adjacentes des deux flasques n'étant pas superposées.

Dans un mode de réalisation dans lequel le dispositif est destiné à une tablette arrière ayant un corps qui comporte un panneau de support de charge ayant une joue périphérique descendante qui délimite une forme creuse de concavité tournée vers le bas, il est avantageux que le flasque de la tablette soit placé à l'un des deux coins avant du corps de tablette et soit solidaire d'une joue à distance du panneau de support de la tablette.

Dans un mode de réalisation dans lequel le dispositif est destiné à un support latéral qui comporte un panneau de support ayant une joue descendante, le flasque du support latéral étant placé à la partie avant du corps de support et étant solidaire de la joue à distance du panneau de support, il est avantageux que le panneau du support latéral et le panneau de support de la tablette arrière soient sensiblement dans le prolongement l'un de l'autre dans la position de repos de la tablette arrière.

De préférence, le flasque du support latéral est disposé pratiquement sur toute la longueur du support latéral dans la direction de l'axe longitudinal du véhicule.

De préférence, le flasque de la tablette arrière est disposé uniquement à un coin avant de la tablette arrière.

De préférence, la tablette arrière comporte en outre, du côté avant, une jupe descendante dont une partie forme un prolongement longitudinal de la portion adjacente de flasque de la tablette arrière.

De préférence, la jupe a une épaisseur inférieure à la dimension dudit espace vertical de logement, de sorte que la tablette arrière peut être séparée du support latéral.

De préférence, le support latéral appartient à une custode de véhicule automobile.

L'invention concerne aussi un ensemble à tablette arrière pour véhicule automobile, du type qui comprend une tablette arrière articulée sur des supports latéraux, telle que définie par les précédents paragraphes ; selon l'invention, l'ensemble comporte un organe de maintien de la tablette arrière en position de repos sur les supports latéraux, cet organe de maintien agissant dans la direction longitudinale du véhicule et étant éloigné du dispositif de retenue et d'articulation.

De préférence, le dispositif de maintien est en appui contre la partie arrière de tablette arrière lorsque la tablette est en position de repos et le véhicule est en état de marche.

D'autres caractéristiques et avantages de l'invention seront mieux compris à la lecture de la description qui va suivre d'un exemple de réalisation, faite en référence aux dessins annexés sur lesquels :
la figure 1 est une vue en perspective, avec des parties arrachées, d'un coin avant de support latéral de tablette de véhicule automobile ;
la figure 2 est une vue en perspective, avec des parties arrachées, d'un coin avant de tablette arrière ;
la figure 3 est une vue en perspective représentant la position de coopération de la tablette et du support latéral dans la position de repos de la tablette ;
la figure 4 est une coupe schématique par le plan repéré par la ligne A-A de la figure 3 ;
la figure 5 est une coupe schématique par le plan repéré par la ligne B-B de la figure 3 ;
la figure 6 est une vue en perspective, avec des parties arrachées, illustrant la coopération de la tablette avec un support latéral lorsque la tablette est en position soulevée ;
la figure 7 est une coupe schématique par le plan repéré par la ligne C-C de la figure 6 ;
la figure 8 est une vue en perspective analogue à la figure 3, indiquant le plan de coupe de la figure 9 ; et
la figure 9 est une coupe schématique par le plan repéré par la ligne D-D de la figure 8.

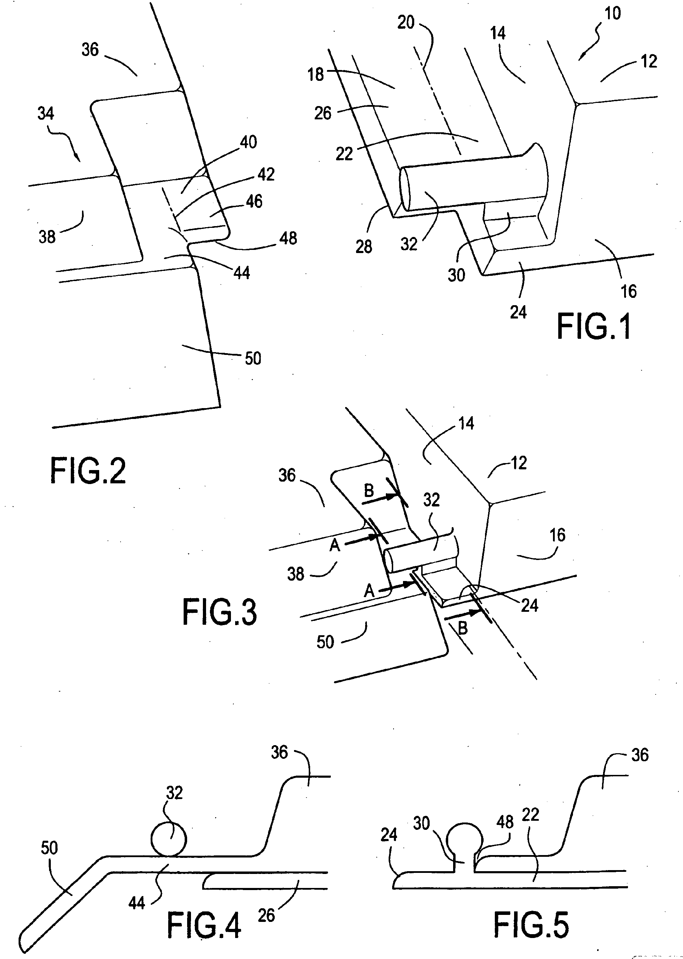

La figure 1 représente le coin avant d'un support latéral 10, par exemple appartenant à une custode. Le support latéral 10 a un panneau supérieur 12 qui possède des joues descendantes 14, 16. Le panneau et les joues forment un corps de support latéral. Un flasque 18 est solidaire de la partie inférieure de la joue 14, à distance du panneau 12. Ce flasque 18 comprend, par rapport à une direction longitudinale 20, une portion 22 adjacente au corps du support latéral et qui se termine à l'avant par un bord 24, et une portion 26 éloignée du corps du support, qui se termine à l'avant par un bord 28 qui est en arrière par rapport au bord avant 24 de la portion adjacente. Le bord avant 28 de la portion éloignée 26 et le bord longitudinal de la partie avant de la portion 22 forment une encoche pratiquement rectangulaire.

Une butée d'articulation 30 dépasse de la portion adjacente 22, en avant du bord avant 28 de la portion éloignée 26. Une butée de retenue 32 dépasse du corps du support latéral, au-dessus de la butée d'articulation 30. Un espace vertical existe entre la butée de retenue 32 et le prolongement de la surface supérieure du flasque 18 du support.

La disposition à un même emplacement des deux butées 30 et 32 dans la direction longitudinale du véhicule n'est pas indispensable, car les deux butées peuvent être décalées dans la direction longitudinale. Ce qui est important est que la butée d'articulation 30 ne se trouve que sur la portion adjacente 22, et que la butée de retenue 32 dépasse au-delà de cette portion adjacente, au-dessus de l'encoche formée par le bord avant 28 de la portion éloignée 26 et le bord longitudinal de la partie avant de la portion adjacente 22.

La figure 2 représente un coin avant d'une tablette arrière 34. Cette tablette 34 comporte un panneau supérieur 36 de support de charges qui est entouré par une joue périphérique descendante 38, le panneau et la joue formant un corps de tablette. Un flasque 40 est formé à une partie inférieure de la joue 38 dont il est solidaire. Ce flasque 40 comprend, de part et d'autre d'une direction longitudinale 42, une partie 44 adjacente au corps de tablette et une partie 46 distante du corps de tablette dans la direction transversale du véhicule. Cette partie éloignée 46 se termine par un bord avant 48 qui est plus en arrière que le bord avant de la portion adjacente 44 qui se raccorde à une jupe 50 placée en avant de la tablette, à la partie inférieure de la joue 38 et dans le prolongement de la portion adjacente 44.

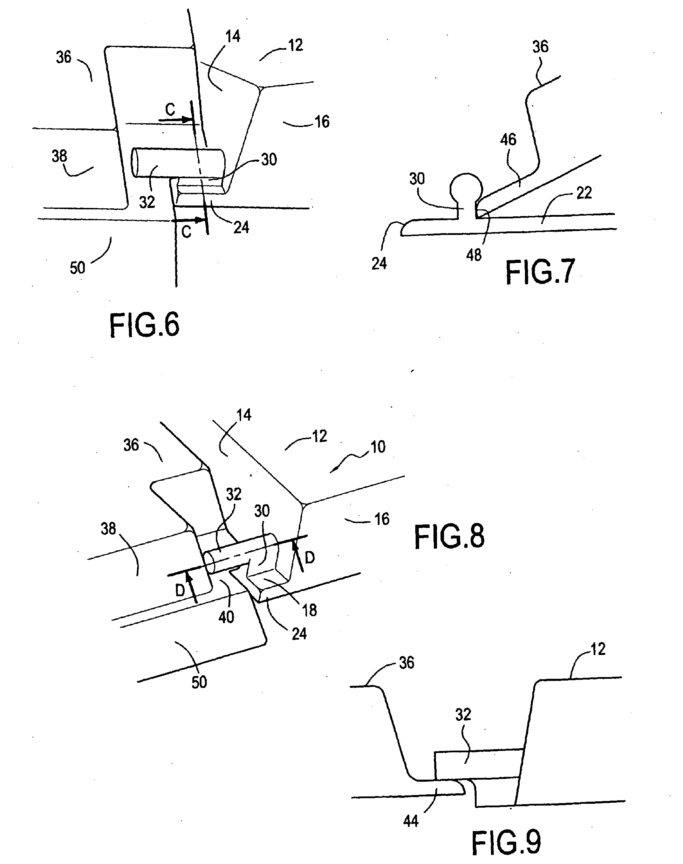

La figure 3 indique comment ces différentes parties du support latéral 10 et de la tablette 34 coopèrent en position de repos. Les figures 4 et 5, qui sont des coupes par les plans repérés par les lignes A-A et B-B de la figure 3, et la figure 9 qui est une coupe suivant la ligne D-D de la figure 8 qui est analogue à la figure 3, indiquent comment coopèrent le support latéral 10 et la tablette 34 dans la position de repos de celle-ci.

Comme l'indique la figure 5, du côté du support latéral, le bord avant 48 de la portion éloignée du flasque de la tablette est en appui contre la butée 30. De cette manière, si la tablette est soulevée, elle tourne autour de l'axe de contact de ce bord avant 48 avec la butée 30.

Du côté de la tablette 34, la portion éloignée 28 du flasque du support latéral supporte la portion adjacente 44 du flasque de la tablette et la butée 32 la retient verticalement. Ainsi, la tablette ne peut pas se soulever. Cette disposition est clairement représentée sur la figure 9.

Les figures 6 et 7 représentent la disposition observée lorsque la tablette est soulevée. La figure 7 indique comment l'articulation s'effectue autour d'un axe formé par contact du bord 48 de la tablette avec la butée 30 d'articulation.

On note sur les diverses figures que les deux fonctions "articulation" d'une part et "retenue" d'autre part sont exécutées dans des régions séparées dans la direction transversale du véhicule. Ainsi, du côté du support latéral, la fonction d'articulation est obtenue par contact du bord 48 avec la butée 30. Du côté de la tablette, la fonction de retenue est assurée sur la partie de flasque 44 de la tablette par la butée de retenue 32 et la portion 26 de flasque du support latéral.

Le positionnement en direction verticale de la tablette par rapport aux supports latéraux est donc réalisé par les flasques et les butées de retenue des supports latéraux. Le positionnement dans la direction avant-arrière est réalisé vers l'avant par la butée 30 d'articulation. Cependant, le positionnement n'est pas réalisé vers l'arrière. Selon l'invention, ce positionnement peut être effectué par tout moyen. En particulier, il peut être réalisé uniquement lorsque le hayon du véhicule est fermé, celui-ci ayant un panneau qui maintient alors l'arrière de la tablette, par exemple avec des butées élastiques. Cependant, le maintien de la tablette afin qu'elle ne glisse pas vers l'arrière peut aussi être réalisé par des moyens coopérants tels que des saillies et des encoches, formées sur la tablette et le support latéral ou sur tout autre élément du véhicule.

On note sur la figure 1 que le support latéral peut être réalisé simplement et à faible coût lors de la fabrication d'un panneau de custode. Bien qu'on ait représenté la butée 32 sous forme d'un axe de section circulaire, cette disposition n'est pas indispensable et toute autre forme facilement obtenue par moulage peut être utilisée.

La figure 2 indique que la tablette peut être facilement formée d'un matériau d'épaisseur sensiblement constante, par exemple de matière plastique armée de fibres, au cours d'une simple opération de moulage.

Ainsi, la fabrication du dispositif de retenue et d'articulation selon l'invention ne nécessite pas l'utilisation de pièces rapportées, par exemple qui devraient être achetées à des fournisseurs et qui augmenteraient le coût du dispositif de retenue et d'articulation.

L'invention concerne aussi un ensemble formé par une tablette arrière et ses supports latéraux, en coopération avec un organe de maintien qui assure le maintien de la tablette dans la direction longitudinale du véhicule lorsque celui-ci est à l'état de marche.

## Revendications

1. Dispositif de retenue et d'articulation de tablette arrière destinée à un véhicule automobile ayant un axe longitudinal central dans sa direction avant-arrière, du type qui est formé par
- un support latéral (10) ayant un corps muni d'un flasque sensiblement horizontal (18) disposé du côté du support tourné vers l'axe longitudinal central, et
- une tablette arrière (34) ayant une position de repos dans laquelle elle est pratiquement horizontale, la tablette ayant un corps muni, du côté tourné vers le support latéral, d'un flasque (40) qui, dans la position de repos, est supporté par le flasque (18) du support latéral,
**caractérisé en ce que**
- le flasque (18) du support latéral comporte, depuis le corps du support latéral vers l'axe longitudinal du véhicule, une portion (22) adjacente au corps du support latéral et une portion (26) éloignée de ce corps, le bord avant (28) de la portion éloignée (26) du flasque étant plus en arrière que le bord avant (24) de la portion adjacente (22) du flasque, de sorte qu'une encoche est délimitée par le bord avant (28) de la partie éloignée et le bord longitudinal avant de la portion adjacente du flasque,
- le support latéral (10) comporte un ensemble de butée comprenant une butée d'articulation (30) solidaire de la portion adjacente (22) du flasque du support latéral et disposée en avant du bord avant de la portion éloignée du flasque, et une butée de retenue (32) disposée au-dessus de l'encoche, au niveau du bord avant (28) de la partie éloignée (26) du flasque ou en avant de ce bord avant, un espace vertical de logement étant dégagé entre la butée de retenue (32) et le prolongement de la surface supérieure du flasque (18) dans l'encoche,
- le flasque (40) de la tablette arrière comprend, depuis le corps de tablette et en s'éloignant de l'axe longitudinal, une portion (44) adjacente au corps de tablette et une portion (46) éloignée de ce corps, le bord avant (48) de la portion éloignée (46) étant plus en arrière que le bord avant de la portion adjacente (44), de sorte qu'une encoche de flasque (40) de tablette est délimitée par le bord avant (48) de la partie éloignée et le bord longitudinal avant de la portion adjacente,
- le bord avant (48) de la portion éloignée (46) de flasque de la tablette délimite un axe de pivotement de tablette par contact avec la butée d'articulation (30) de la portion adjacente (22) de flasque du support latéral, l'axe étant transversal à l'axe longitudinal central du véhicule,
- l'épaisseur de la partie avant de la portion adjacente (44) de flasque de tablette qui est adjacente à l'encoche du flasque (40) de tablette est inférieure ou égale audit espace vertical de logement, et,
- dans la position de repos de la tablette sur le support latéral, la portion éloignée (46) du flasque de la tablette est superposée à la portion adjacente (22) du flasque du support latéral, et la portion adjacente (44) du flasque de la tablette est superposée à la portion éloignée (26) du flasque du support latéral, les parties avant des portions adjacentes (22, 44) des deux flasques (18, 40) n'étant pas superposées.

2. Dispositif selon la revendication 1, destiné à une tablette arrière ayant un corps qui comporte un panneau (36) de support de charges ayant une joue périphérique descendante (38) qui délimite une forme creuse de concavité tournée vers le bas, **caractérisé en ce que** le flasque (40) de la tablette est placé à l'un des deux coins avant du corps de tablette et est solidaire d'une joue (38) à distance du panneau (36) de support de la tablette.

3. Dispositif selon la revendication 1, destiné à un support latéral qui comporte un panneau de support (12) ayant une joue descendante (14, 16), le flasque (18) du support latéral étant placé à la partie avant du corps de support et étant solidaire de la joue (14) à distance du panneau de support, **caractérisé en ce que** le panneau de support (12) du support latéral et le panneau de support (36) de la tablette arrière sont sensiblement dans le prolongement l'un de l'autre dans la position de repos de la tablette arrière.

4. Dispositif selon l'une quelconque des revendications précédentes, **caractérisé en ce que** le flasque (18) du support latéral est disposé pratiquement sur toute la longueur du support latéral dans la direction de l'axe longitudinal du véhicule.

5. Dispositif selon l'une quelconque des revendications précédentes, **caractérisé en ce que** le flasque (40) de la tablette arrière est disposé uniquement à un coin avant de la tablette arrière.

6. Dispositif selon l'une quelconque des revendications précédentes, **caractérisé en ce que** la tablette arrière comporte en outre, du côté avant, une jupe descendante (50) dont une partie forme un prolongement longitudinal de la portion adjacente (44) de flasque de la tablette arrière.

7. Dispositif selon la revendication 6, **caractérisé en ce que** la jupe (50) a une épaisseur inférieure à la dimension dudit espace vertical de logement, de sorte que la tablette arrière peut être séparée du support latéral.

8. Dispositif selon l'une quelconque des revendications précédentes, **caractérisé en ce que** le support latéral (10) appartient à une custode de véhicule automobile.

9. Ensemble à tablette arrière pour véhicule automobile, du type qui comprend une tablette arrière (34) articulée sur des supports latéraux (10) par des dispositifs de retenue et d'articulation selon l'une quelconque des revendications précédentes, **caractérisé en ce qu'**il comporte un organe de maintien de la tablette arrière (34) en position de repos sur les supports latéraux (10), cet organe de maintien agissant dans la direction longitudinale du véhicule et étant éloigné du dispositif de retenue et d'articulation.

10. Ensemble selon la revendication 9, **caractérisé en ce que** le dispositif de maintien est en appui contre la partie arrière de tablette arrière (34) lorsque celle-ci est en position de repos et le véhicule est en état de marche.

## Claims

1. Securing and articulation device for a rear tray intended for a motor vehicle having a longitudinal centre axis in its front-to-rear direction, of the type formed by
• a lateral support (10) having a body provided with a substantially horizontal flange (18) arranged on the side of the support facing the longitudinal centre axis, and
• a rear tray (34) having a resting position, in which it is practically horizontal, wherein on the side facing the lateral support said tray has a body provided with a flange (40), which in the resting position is supported by the flange (18) of the lateral support,
**characterised in that**
• viewed from the body of the lateral support towards the longitudinal axis of the vehicle, the flange (18) of the lateral support has a section (22) adjacent to the body of the lateral support and a section (26) remote from this body, wherein the front edge (28) of the remote section (26) of the flange is further to the rear than the front edge (24) of the adjacent section (22) of the flange, such that a recess is delimited by the front edge (28) of the remote section and the front longitudinal edge of the adjacent section of the flange,
• the lateral support (10) has an abutment arrangement comprising an articulation abutment (30), which is integral to the adjacent section (22) of the flange of the lateral support and arranged in front of the front edge of the remote section of the flange, and a securing abutment (32) arranged above the recess at the level of the front edge (28) of the remote section (26) of the flange or in front of this front edge, wherein a vertical receiving space is left between the securing abutment (32) and the extension of the upper face of the flange (18) in the recess,
• viewed from the tray body and moving away from the longitudinal axis, the flange (40) of the rear tray comprises a section (44) adjacent to the tray body and a section (46) remote from this body, wherein the front edge (48) of the remote section (46) is further to the rear than the front edge of the adjacent section (44), such that a recess of the tray flange (40) is delimited by the front edge (48) of the remote section and the front longitudinal edge of the adjacent section,
• the front edge (48) of the remote section (46) of the flange of the tray delimits a pivoting axis of the tray by contact with the articulation abutment (30) of the adjacent section (22) of the flange of the lateral support, wherein the axis runs transversely to the longitudinal centre axis of the vehicle,
• the thickness of the front part of the adjacent section (44) of the tray flange that is adjacent to the recess of the flange (40) of the tray is less than or equal to said vertical receiving space, and
• in the resting position of the tray on the lateral support, the remote section (46) of the flange of the tray is positioned on top of the adjacent section (22) of the flange of the lateral support and the adjacent section (44) of the flange of the tray is positioned on top of the remote section (26) of the flange of the lateral support, and the front parts of the adjacent sections (22, 44) of the two flanges (18, 40) are not positioned on top of one another.

2. Device according to claim 1, intended for a rear tray having a body comprising a load-supporting panel (36) with a downward sloping peripheral cheek (38), which defines a downward facing concave hollow shape, **characterised in that** the flange (40) of the tray is positioned at one of the two front corners of the tray body and is integral to a cheek (38) at a distance from the support panel (36) of the tray.

3. Device according to claim 1, intended for a lateral support comprising a support panel (12) having a downward sloping cheek (14, 16), wherein the flange (18) of the lateral support is positioned at the front part of the support body and is integral to the cheek (14) at a distance from the support panel, **characterised in that** the support panel (12) of the lateral support and the support panel (36) of the rear tray are substantially arranged in extension of one another in the resting position of the rear tray.

4. Device according to any one of the preceding claims, **characterised in that** the flange (18) of the lateral support is arranged practically over the entire length of the lateral support in the direction of the longitudinal axis of the vehicle.

5. Device according to any one of the preceding claims, **characterised in that** the flange (40) of the rear tray is arranged solely at a front corner of the rear tray.

6. Device according to any one of the preceding claims, **characterised in that** on the front side, the rear tray additionally comprises a downward sloping skirt (50), of which one part forms a longitudinal extension of the adjacent section (44) of the flange of the rear tray.

7. Device according to claim 6, **characterised in that** the skirt (50) has a thickness that is less than the dimension of said vertical receiving space such that the rear tray can be separated from the lateral support.

8. Device according to any one of the preceding claims, **characterised in that** the lateral support (10) is part of a rear quarter panel of a motor vehicle.

9. Rear tray assembly for a motor vehicle of the type comprising a rear tray (34) articulated to lateral supports (10) by securing and articulation devices according to any one of the preceding claims, **characterised in that** it comprises a member for holding the rear tray (34) in a resting position on the lateral supports (10), wherein this holding member acts in the longitudinal direction of the vehicle and is remote from the securing and articulation device.

10. Assembly according to claim 9, **characterised in that** the holding device abuts against the rear part of the rear tray (34) when this is in resting position and the vehicle is running.

## Patentansprüche

1. Halte- und Gelenkvorrichtung für eine Heckablage, die vorgesehen ist für ein Kraftfahrzeug mit einer zentralen Längsachse in Vorwärts-Rückwärts-Richtung, des Typs, der gebildet ist aus:
- einem seitlichen Träger (10) mit einem Körper, der mit einem im Wesentlichen horizontalen Seitenstück (18) versehen ist, das an der Seite des Trägers angeordnet ist, die in Richtung zu der zentralen Längsachse gewandt ist, und
- einer Heckablage (34) mit einer Ruhestellung, in welcher sie praktisch horizontal ist, wobei die Ablage einen Körper aufweist, der auf der Seite, die dem seitlichen Träger zugewandt ist, ein Seitenstück (40) aufweist, das in der Ruhestellung von dem Seitenstück (18) des seitlichen Trägers getragen wird,
**dadurch gekennzeichnet, dass**
- das Seitenstück (18) des seitlichen Trägers von dem Körper des seitlichen Trägers aus in Richtung zu der Längsachse des Fahrzeugs einen Abschnitt (22), der zu dem Körper des seitlichen Trägers benachbart ist, und einen Abschnitt (26), der von dem Körper entfernt ist, aufweist, wobei der vordere Rand (28) des entfernten Abschnitts (26) des Seitenstücks weiter hinten liegt als der vordere Rand (24) des benachbarten Abschnitts (22) des Seitenstücks, so dass eine Aussparung von dem vorderen Rand (28) des entfernten Teils und dem vorderen Längsrand des benachbarten Abschnitts des Seitenstücks begrenzt wird,
- der seitliche Träger (10) einen Anschlagsaufbau aufweist, der aufweist: einen Gelenkanschlag (30), der mit dem benachbarten Abschnitt (22) des Seitenstücks des seitlichen Trägers einstückig ist und vor dem vorderen Rand des entfernten Abschnitts des Seitenstücks angeordnet ist, und einen Halte-Anschlag (32), der über der Aussparung auf der Höhe des vorderen Randes (28) des entfernten Abschnitts (26) des Seitenstücks oder vor dem vorderen Rand angeordnet ist, wobei ein vertikaler Aufnahmeraum zwischen dem Halte-Anschlag (32) und der Verlängerung der oberen Fläche des Seitenstücks (18) in der Aussparung ausgebildet ist,
- das Seitenstück (40) der Heckablage von dem Körper der Ablage aus und von der Längsachse weg aufweist: einen Abschnitt (44), der zu dem Körper der Ablage benachbart ist, und einen Abschnitt (46), der von dem Körper entfernt ist, wobei der vordere Rand (48) des entfernten Abschnitts (46) weiter hinten liegt als der vordere Rand des benachbarten Abschnitts (44), so dass eine Aussparung des Seitenstücks (40) der Ablage von dem vorderen Rand (48) des entfernten Teils und des vorderen Längsrandes des benachbarten Abschnitts begrenzt wird,
- der vordere Rand (48) des entfernten Abschnitts (46) des Seitenstücks der Ablage eine Ablage-Schwenk-Achse durch Kontakt mit dem Gelenkanschlag (30) des benachbarten Abschnitts (22) des Seitenstücks des seitlichen Trägers begrenzt, wobei die Achse quer zu der zentralen Längsachse des Fahrzeugs ist,
- die Dicke des vorderen Teils des benachbarten Abschnitts (44) des Seitenstücks der Ablage benachbart zu der Aussparung des Seitenstücks (40) der Ablageplatte kleiner als oder gleich dem vertikalen Aufnahmeraum ist, und
- der entfernte Abschnitt (46) des Seitenstücks der Ablage in der Ruhestellung der Ablage auf dem benachbarten Abschnitt (22) des Seitenstücks des seitlichen Trägers liegt, und der benachbarte Abschnitt (44) des Seitenstücks der Ablage auf dem entfernten Abschnitt (26) des Seitenstücks des seitlichen Trägers liegt, wobei die vorderen Teile der benachbarten Abschnitte (22, 44) der beiden Seitenstücke (18, 40) nicht aufeinander liegen.

2. Vorrichtung gemäß Anspruch 1, vorgesehen für eine Heckablage mit einem Körper, der eine Platte (36) zum Tragen von Lasten aufweist, mit einer abwärts geneigten Umfangswand (38), die eine hohle Konkavitätsform begrenzt, die in Richtung nach unten gerichtet ist, **dadurch gekennzeichnet, dass** das Seitenstück (40) der Ablage in einer der beiden vorderen Ecken des Ablagekörpers platziert und einstückig mit einer Seitenwand (38) in Entfernung zu der Trägerplatte (36) der Ablageplatte ist.

3. Vorrichtung gemäß Anspruch 1, vorgesehen für einen seitlichen Träger, aufweisend: eine Trägerplatte (12) mit einer abwärts geneigten Seitenwand (14, 16), wobei das Seitenstück (18) des seitlichen Trägers an dem vorderen Teil des Trägerkörpers platziert und mit der Seitenwand (14) in Entfernung zu der Trägerplatte einstückig ist, **dadurch gekennzeichnet, dass** die Trägerplatte (12) des seitlichen Trägers und die Trägerplatte (36) der Heckablage in der Ruhestellung der Heckablage im Wesentlichen in der Verlängerung voneinander sind.

4. Vorrichtung gemäß einem der vorhergehenden Ansprüche, **dadurch gekennzeichnet, dass** das Seitenstück (18) des seitlichen Trägers praktisch über die gesamte Länge des seitlichen Trägers in der Richtung der Längsachse des Fahrzeugs angeordnet ist.

5. Vorrichtung gemäß einem der vorhergehenden Ansprüche, **dadurch gekennzeichnet, dass** das Seitenstück (40) der Heckablage ausschließlich in einer vorderen Ecke der Heckablage angeordnet ist.

6. Vorrichtung gemäß einem der vorhergehenden Ansprüche, **dadurch gekennzeichnet, dass** die Heckablage ferner auf der vorderen Seite eine abwärts geneigte Verkleidung (50) aufweist, wobei ein Teil derselben eine Verlängerung in Längsrichtung des benachbarten Abschnitts (44) des Seitenstücks der Heckablage bildet.

7. Vorrichtung gemäß Anspruch 6, **dadurch gekennzeichnet, dass** die Verkleidung (50) eine Dicke hat, die kleiner als die Abmessung des vertikalen Aufnahmeraums ist, so dass die Heckablage von dem seitlichen Träger getrennt werden kann.

8. Vorrichtung gemäß einem der vorhergehenden Ansprüche, **dadurch gekennzeichnet, dass** der seitliche Träger (10) zu einem Seiten-Heckfenster des Kraftfahrzeugs gehört.

9. Heckablagen-Anordnung für ein Kraftfahrzeug, des Typs der aufweist: eine Heckablage (34), die auf seitlichen Trägern (10) durch Haltevorrichtungen und Gelenkvorrichtungen gemäß einem der vorhergehenden Ansprüche gelenkig gelagert ist, **dadurch gekennzeichnet, dass** sie aufweist: ein Mittel zum Halten der Heckablage (34) in einer Ruhestellung auf den seitlichen Trägern (10), wobei das Haltemittel in der Längsrichtung des Fahrzeugs wirkt und von der Halte- und Gelenkvorrichtung entfernt ist.

10. Anordnung gemäß Anspruch 9, **dadurch gekennzeichnet, dass** die Haltevorrichtung gegen den hinteren Teil der Heckablage (34) anliegt, wenn diese in Ruheposition ist und sich das Fahrzeug in einem Zustand des Fahrens befindet.
